# EUROPEAN PATENT APPLICATION

(11) **EP 2 587 742 A1**
(43) Date of publication of application: **01.05.2013**
(21) Application number: 11797495.6
(22) Date of filing: 25.02.2011
(51) Int. Cl.: H04L 12/56, H04L 12/46

(54) **METHOD FOR FORWARDING MESSAGE AND SWITCH CHIP**

(30) Priority: 23.06.2010 CN 201010217456
(71) Applicant: ZTE Corporation, Shenzhen, Guangdong 518057 (CN)
(72) Inventor: XU, Xiaochun, Shenzhen Guangdong 518057 (CN)
(74) Representative: Kling, Simone
(86) International application number: PCT/CN2011/071330
(87) International publication number: WO 2011/160464

(57) **Abstract**

A method for forwarding a packet is provided, which includes configuring a cascade port of a switch chip to operate in an internal loopback mode, performing a termination processing for the packet, looping the packet after the termination processing back to the cascade port, initializing the loopback packet and forwarding the packet. A switch chip is also provided. With the technical solutions of the disclosure, packet forwarding in both uplink and downlink directions in MPLS VPN can be implemented by using a single PE and a single port.

## Description

### TECHNICAL FIELD

The disclosure relates to the field of Multi-Protocol Label Switching (MPLS) Virtual Private Network (VPN), and in particular to a method for forwarding a packet and a switch chip.

### BACKGROUND

The MPLS network has become a development trend of the next generation core network, and the MPLS VPN provides in the MPLS network the VPN virtual private switch network function using MPLS techniques, and mainly includes an MPLS layer 2 VPN and an MPLS layer 3 VPN. A layer 2 connection can be established between different nodes via the MPLS network. The MPLS layer 2 VPN divides the management duties of MPLS network operations. Specifically, a Provide Edge (PE) takes charge of layer 2 connection and packet forwarding between custom edges (CE), and the CEs perform functions associated with layer 3 and the above. In this way, the management cost regarding the network operation may be reduced. The MPLS layer 3 VPN may divide the current IP network into networks logically isolated with each other. Such networks may be widely applied, for example, to implement interconnection between different departments or within a same department of an enterprise or of the government, or to provide a new service such as the IP telephony service.

Compared with either the traditional circuit or virtual circuit based VPN or the IP tunnel based VPN, the MPLS VPN technique has significant advantages. As the MPLS VPN technique becomes more and more mature, the increasing user requirements on network bandwidth, service quality, and flexibility in accessing the MPLS network and the like are taken account in addition to reducing the cost. The MPLS VPN technique therefore stands for the future development trend of the Internet.

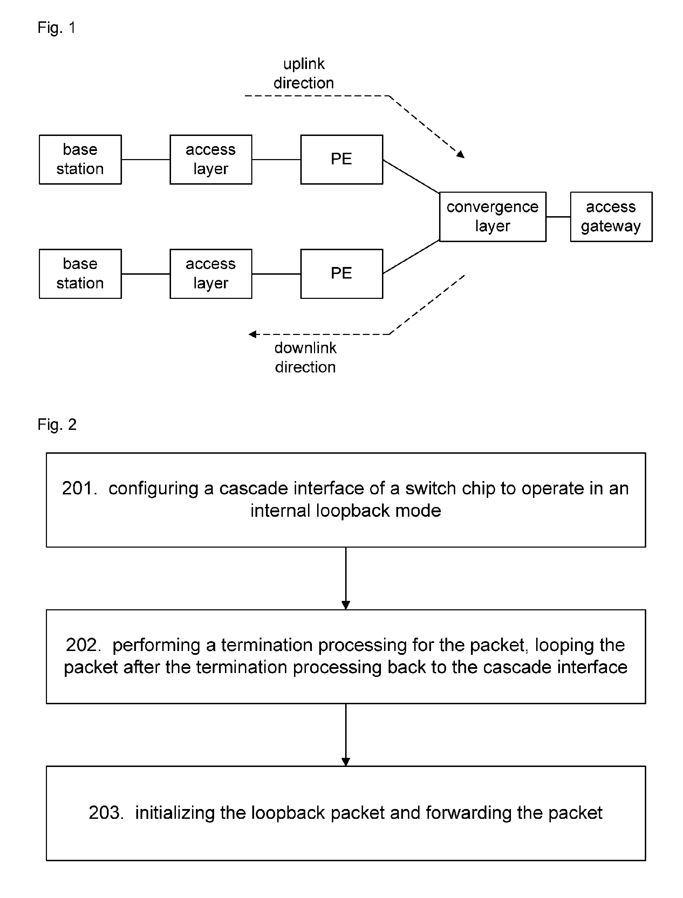

Fig. 1 is a schematic view of the networking of the MPLS VPN in the related art. As shown in Fig. 1, the layer 2 VPN serves as an access layer for user access and is connected to an access-side-port of the PE. The layer 3 VPN serves as a convergence layer and is connected to a network-side-port of the PE. A base station is connected to the PE via a Pseudo Wire (PW). The direction from the layer 2 VPN to the layer 3 VPN is referred to as an uplink direction, in which the PE has to perform a layer 2 VPN termination processing for the packet. The direction from the layer 3 VPN to the layer 2 VPN is referred to as a downlink direction, in which the PE has to perform a layer 3 VPN termination processing for the packet and a layer 2 VPN initialization for the packet, and then forwards the packet to the layer 2 VPN. However, the switch chip in the PE of the related art cannot support these functions directly.

Instead, these functions can only be implemented by using existing functions of the switch chip and performing a comprehensive networking application. There are two method for implementing the functions. The first method is implemented with two PEs, wherein a PE performs the layer 2 VPN termination and the layer 3 VPN initialization and forwards the packet to the layer 3 VPN, and another PE performs the layer 3 VPN termination and the layer 2 VPN initialization, and forwards the packet to the layer 2 VPN. The second method is implemented with a single PE, wherein in the uplink direction, two ports in the PE are configured to operate in an internal loopback mode; after the switch chip performs the layer 2 VPN termination processing for the packet, the packet is looped back to the switch chip, the switch chip may then implement the layer 3 VPN initialization for the packet, and it is a similar case for the downlink direction. The first method is disadvantageous in that one more PE is used compared with the second method, increasing the cost for networking and maintenance; for the second method, although one less PE is used, two ports are used, and accordingly the cost and the maintenance expense are also high.

### SUMMARY

In view of the above, the disclosure provides a method for forwarding a packet and a switch chip, which is capable of implementing packet forwarding in both uplink and downlink directions in the MPLS VPN networking by using a single PE and a single port.

The technical solutions of the disclosure are implemented as follows.

The disclosure provides a method for forwarding a packet, which includes: configuring a cascade port of a switch chip to operate in an internal loopback mode; performing a termination processing for the packet; looping the packet after the termination processing back to the cascade port; initializing the loopback packet; and forwarding the packet.

In the above method, configuring the cascade port of the switch chip to operate in the internal loopback mode may include: setting, by the switch chip of a Provide Edge (PE), the value of a register in the cascade port of the switch chip of the PE, for setting the internal loopback mode, to be a valid value.

In the above method, performing the termination processing for the packet may include: determining, by the switch chip of a PE, whether the packet is in an uplink direction or a downlink direction, performing, by the switch chip, a layer 2 Virtual Private Network (VPN) termination processing when the packet is in the uplink direction, and performing, by the switch chip, a layer 3 VPN termination processing when the packet is in the downlink direction.

In the above method, performing, by the switch chip, the layer 2 VPN termination processing for the packet may include: removing, by the switch chip, the head of the packet and leaving the content of the packet; and performing, by the switch chip, the layer 3 VPN termination processing for the packet may include: removing, by the switch chip, the head of the packet and leaving the content of the packet; and adding an internal layer Virtual Local Area Network VLAN label to the packet in an access mode of VLAN stack.

In the above method, initializing the loopback packet may include: determining, by the switch chip, whether the packet is in an uplink direction or a downlink direction based on the number of the VLAN labels in the packet; if determining that the packet is in the uplink direction, performing, by the switch chip, a layer 3 VPN initialization for the loopback packet; and if determining that the packet is in the downlink direction, performing, by the switch chip, a layer 2 VPN initialization for the loopback packet.

In the above method, performing, by the switch chip, the layer 3 VPN initialization for the loopback packet may include: searching for a hardware table item in the switch chip based on a VLAN number of a single label in the packet, to obtain a Media Access Control (MAC) address, a Virtual Circuit (VC) label and a tunnel label;, taking the obtained MAC address, VC label and tunnel label as the head of the packet; and forming the packet with the head and the content of the packet.

In the above method, performing, by the switch chip, the layer 2 VPN initialization for the loopback packet may include: searching, by the switch chip, for a hardware table item in the switch chip based on a VLAN number of double labels in the packet, to obtain a MAC address, a VC label, and a tunnel label; removing, by the switch chip, an external layer VLAN label in the packet; taking the obtained MAC address, VC label, and tunnel label as the head of the packet; and forming the packet with the head and the content of the packet.

The disclosure also provides a switch chip, which includes a configuring module, a termination processing module, a cascade port, and a forwarding module, wherein the configuring module is adapted to configure the cascade port to operate in an internal loopback mode; the termination processing module is adapted to perform a termination processing for the packet and send the packet after the termination processing to the cascade port; the cascade port is adapted to loop the packet after the termination processing back to the forwarding module; the forwarding module is adapted to initialize the loopback packet and to forward the packet.

In the switch chip, the termination processing module may perform the termination processing for the packet and send the packet after the termination processing to the cascade port by determining whether the packet is in an uplink direction or a downlink direction; performing a layer 2 VPN termination processing for the packet when the packet is in the uplink direction; and performing a layer 3 VPN termination processing for the packet when the packet is in the downlink direction.

In the switch chip, the forwarding module may initialize the loopback packet by determining whether the packet is in an uplink direction or a downlink direction based on the number of the VLAN labels in the packet; if determining that the packet is in the uplink direction, performing a layer 3 VPN initialization for the loopback packet; and if determining that the packet is in the downlink direction, performing a layer 2 VPN initialization for the loopback packet.

The method for forwarding a packet and the switch chip according to the present disclosure implement packet forwarding in both uplink and downlink directions in the MPLS VPN networking by using a single PE and a single port, better support layer 2 and layer 3 VPN networking applications, and may reduce the number of equipments used in the MPLS VPN networking, thereby reducing the networking complexity and saving the costs for maintenance and equipment management.

### BRIEF DESCRIPTION OF THE DRAWINGS

Fig. 1 is the schematic view of the networking of the MPLS VPN in the related art;
Fig. 2 is a flowchart of the method for forwarding a packet according to the disclosure; and
Fig. 3 is a schematic view of the structure of the switch chip according to the disclosure.

### DETAILED DESCRIPTION

The Virtual Local Area Network (VLAN) stack refers to that whenever a port of the switch chip in an equipment receives a packet, the switch chip will label the packet with VLAN, no matter the packet carries a VLAN label or not. In this way, if the received packet already carries a VLAN label, the packet will become a packet with double VALN labels; in the MPLS VPN network, a packet itself has a VLAN label; according to the 802.1 Q protocol, the PE does not have the VLAN stack access when performing a layer 2 VPN termination in the MPLS VPN and has the VLAN stack access only when performing a layer 3 VPN termination in the MPLS VPN.

The basic concept of the discloses lies in that a cascade port of the switch chip is configured to operate in an internal loopback mode, a termination of the packet is performed, after that the terminated packet is looped back at the cascade port, and the loopback packet is initialized and forwarded.

The disclosure is further explained below with reference to the figures and specific embodiments.

The disclosure provides a method for forwarding a packet. Fig. 2 is a flowchart of the method for forwarding a packet according to the disclosure. As shown in Fig. 2, the method includes the following steps:
Step 201: configuring a cascade port of a switch chip to operate in an internal loopback mode.

Specifically, the switch chip of a PE sets the value of a register in the cascade port of the switch chip for setting the internal loopback mode to be a valid value "1", such that the cascade port of the switch chip may be configured to operate in an internal loopback mode. The switch chip in this embodiment may be any chip that has the VLAN stack access, such as a common chip or an Application Specific Integrated Circuit (ASIC) chip that has the VLAN stack access, or the like.

Step 202: performing a termination processing for the packet, looping the packet after the termination processing back to the cascade port.

Specifically, the PE may receive a packet from the layer 2 VPN or from the layer 3 VPN, and the switch chip of the PE determines whether the packet is in the uplink direction or in the downlink direction, wherein the packet is in the uplink direction if the packet comes from an access-side-port, and the packet is in the downlink direction if the packet comes from a network-side-port.

When the packet is in the uplink direction, the switch chip performs the layer 2 VPN termination processing for the packet, namely, removes the head of the packet and leaves the content of the packet; the packet after the layer 2 VPN termination processing is sent by the switch chip to a cascade port of the switch chip, and as the cascade port has been configured to operate in the internal loopback mode, the packet arriving at the cascade port is looped back to the switch chip.

When the packet is in the downlink direction, the switch chip performs the layer 3 VPN termination processing for the packet, namely, firstly the head of the packet is removed and the content of the packet is left, then an internal layer VLAN label is added to the packet which already has a VLAN label in an access mode of VLAN stack, namely, the switch chip inserts a VLAN label containing a VLAN number between the content of the packet and the existing VLAN label. The VLAN numbers in the two VLAN labels may be the same or different. In this embodiment, in order to conveniently find out information such as the output port in a VLAN-label-based lookup, the internal VLAN label may be set to be as same as the existing VLAN label, that is, the VLAN numbers of the two VLAN labels are the same. The packet after the layer 3 VPN termination processing is sent by the switch chip to a cascade port of the switch chip. Since the cascade port has been configured to operate in the internal loopback mode, the packet arriving at the cascade port is looped back to the switch chip.

In this embodiment, an internal VLAN label is added to the packet in the downlink direction, such that the packet has double VLAN labels. In this way, a packet in the downlink direction may be distinct from one in the uplink direction.

Step 203: performing initialization for the loopback packet, and forwarding the packet.

Specifically, the switch chip receives the packet looped back to the cascade port, determines whether the packet is in the uplink or downlink direction based on the number of VLAN labels in the packet, wherein the packet is in the uplink direction if the packet has a single VLAN label, and is in the downlink direction if it has two VLAN labels.

When the packet is in the uplink direction, the switch chip performs the layer 3 VPN initialization for the loopback packet, namely the switch chip searches for a hardware table item in the switch chip by using the VLAN number in the single label of the packet, finds out an output port of the packet, a Media Access Control (MAC) address of the packet, a Virtual Circuit (VC) label of the packet, and a tunnel label of the packet by searching for the hardware table item; takes the MAC address, the VC label, and the tunnel label as the head of the packet to form the packet with the packet content, and forwards the packet by using the output port. In this embodiment, in the uplink direction, the found output port is the network-side-port, via which the packet is sent to the layer 3 VPN.

When the packet is in the downlink direction, the switch chip performs the layer 2 VPN initialization for the loopback packet, namely the switch chip searches for a hardware table item in the switch chip by using the VLAN number in the double labels of the packet, finds out an output port of the packet, a Media Access Control (MAC) address of the packet, a Virtual Circuit (VC) label of the packet, and a tunnel label of the packet by searching for the hardware table item; since the purpose of distinguishing from the packet in the uplink direction has been achieved, the switch chip, after finding out the output port, removes the external layer VALN label in the packet, restores the packet that has double VLAN labels to the packet has a single VALN label, takes the MAC address, the VC label, and the tunnel label as the head of the packet to form the packet with the packet content, and forwards the packet by using the found output port. In this embodiment, in the downlink direction, the found output port is the access-side-port, via which the packet is sent to the layer 2 VPN.

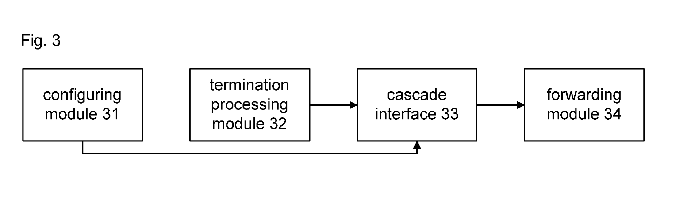

In order to implement the above method, the disclosure provides a switch chip. Fig. 3 is a schematic view of the structure of the switch chip according to the disclosure. As shown in Fig. 3, the switch chip includes a configuring module 31, a termination processing module 32, a cascade port 33, and a forwarding module 34, wherein
the configuring module 31 is adapted to configure the cascade port 33 to operate in an internal loopback mode;
the termination processing module 32 is adapted to perform a termination processing for the packet and send the packet after the termination processing to the cascade port 33;
the cascade port 33 is adapted to loop the packet after the termination processing back to the forwarding module 34;
the forwarding module 34 is adapted to initialize the loopback packet and to forward the packet.

The configuring module 31 configures the cascade port 33 to operate in an internal loopback mode by setting the register in the cascade port 33 for setting the internal loopback mode to be the valid value;
the termination processing module 32 performs the termination processing for the packet and sends the packet after the termination processing to the cascade port 33 by determining whether the packet is in an uplink direction or a downlink direction; performing a layer 2 VPN termination processing for the packet when the packet is in the uplink direction; and performing a layer 3 VPN termination processing for the packet when the packet is in the downlink direction; and

The forwarding module 34 initializes the loopback packet by determining whether the packet is in an uplink direction or a downlink direction based on the number of the VLAN labels in the packet; if determining that the packet is in the uplink direction, performing a layer 3 VPN initialization for the loopback packet; and if determining that the packet is in the downlink direction, performing a layer 2 VPN initialization for the loopback packet.

What is described above is merely preferred embodiments of the disclosure and is not intended to limit the protection scope of the disclosure, and any modification, equivalent replacement, and improvement made within the disclosure shall be included in the scope of the disclosure.

## Claims

1. A method for forwarding a packet, comprising:
configuring a cascade port of a switch chip to operate in an internal loopback mode;
performing a termination processing for the packet;
looping the packet after the termination processing back to the cascade port;
initializing the loopback packet; and
forwarding the packet.

2. The method according to claim 1, wherein configuring the cascade port of the switch chip to operate in the internal loopback mode comprises:
setting, by the switch chip of a Provide Edge (PE), the value of a register in the cascade port of the switch chip of the PE, for setting the internal loopback mode, to be a valid value.

3. The method according to claim 1, wherein performing the termination processing for the packet comprises:
determining, by the switch chip of a PE, whether the packet is in an uplink direction or in a downlink direction;
performing, by the switch chip, a layer 2 Virtual Private Network (VPN) termination processing for the packet when the packet is in the uplink direction; and
performing, by the switch chip, a layer 3 VPN termination processing for the packet when the packet is in the downlink direction.

4. The method according to claim 3, wherein performing, by the switch chip, the layer 2 VPN termination processing for the packet comprises:
removing, by the switch chip, the head of the packet and leaving the content of the packet; and
wherein performing, by the switch chip, the layer 3 VPN termination processing for the packet comprises:
removing, by the switch chip, the head of the packet and leaving the content of the packet; and adding an internal layer Virtual Local Area Network (VLAN) label label to the packet in an access mode of VLAN stack.

5. The method according to any one of claims 1 to 4, wherein initializing the loopback packet comprises:
determining, by the switch chip, whether the packet is in an uplink direction or a downlink direction based on the number of the VLAN labels in the packet;
if determining that the packet is in the uplink direction, performing, by the switch chip, a layer 3 VPN initialization for the loopback packet; and
if determining that the packet is in the downlink direction, performing, by the switch chip, a layer 2 VPN initialization for the loopback packet.

6. The method according to claim 5, wherein performing, by the switch chip, the layer 3 VPN initialization for the loopback packet comprises:
searching for a hardware table item in the switch chip based on a VLAN number of a single label in the packet, to obtain a Media Access Control (MAC) address, a Virtual Circuit (VC) label and a tunnel label;
taking the obtained MAC address, VC label and tunnel label as the head of the packet; and
forming the packet with the head and the content of the packet.

7. The method according to claim 5, wherein performing, by the switch chip, the layer 2 VPN initialization for the loopback packet comprises:
searching, by the switch chip, for a hardware table item in the switch chip based on a VLAN number of double labels in the packet, to obtain a MAC address, a VC label, and a tunnel label;
removing, by the switch chip, an external layer VLAN label in the packet;
taking the obtained MAC address, VC label, and tunnel label as the head of the packet; and
forming the packet with the head and the content of the packet.

8. A switch chip, comprising a configuring module, a termination processing module, a cascade port, and a forwarding module, wherein
the configuring module is adapted to configure the cascade port to operate in an internal loopback mode;
the termination processing module is adapted to perform a termination processing for the packet and send the packet after the termination processing to the cascade port;
the cascade port is adapted to loop the packet after the termination processing back to the forwarding module;
the forwarding module is adapted to initialize the loopback packet and to forward the packet.

9. The switch chip according to claim 8, wherein the termination processing module performs the termination processing for the packet and sends the packet after the termination processing to the cascade port by
determining whether the packet is in an uplink direction or a downlink direction;
performing a layer 2 VPN termination processing for the packet when the packet is in the uplink direction; and
performing a layer 3 VPN termination processing for the packet when the packet is in the downlink direction.

10. The switch chip according to claim 8, wherein the forwarding module initializes the loopback packet by
determining whether the packet is in an uplink direction or a downlink direction based on the number of the VLAN labels in the packet;
if determining that the packet is in the uplink direction, performing a layer 3 VPN initialization for the loopback packet; and
if determining that the packet is in the downlink direction, performing a layer 2 VPN initialization for the loopback packet.
